(19) Europäisches Patentamt / European Patent Office / Office européen des brevets

(11) **EP 4 177 220 A1**

(12) **EUROPEAN PATENT APPLICATION**

(43) Date of publication:
**10.05.2023 Bulletin 2023/19**

(21) Application number: **22206220.0**

(22) Date of filing: **08.11.2022**

(51) International Patent Classification (IPC):
**C01G 51/00** (2006.01)   **H01M 4/131** (2010.01)
**H01M 4/36** (2006.01)   **H01M 4/525** (2010.01)

(52) Cooperative Patent Classification (CPC):
**C01G 51/42; H01M 4/131; H01M 4/364;**
**H01M 4/366; H01M 4/525;** C01P 2002/52;
C01P 2004/53; C01P 2004/61; C01P 2004/84;
C01P 2006/12

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.11.2021 KR 20210152434**

(71) Applicant: **Samsung SDI Co., Ltd.**
**Yongin-si, Gyeonggi-do 17084 (KR)**

(72) Inventors:
• **KIM, Youngki**
 **17084 Yongin-si (KR)**

• **CHO, Yongmok**
 **17084 Yongin-si (KR)**
• **CHOO, Sungho**
 **17084 Yongin-si (KR)**
• **KIM, Sangmi**
 **17084 Yongin-si (KR)**
• **CHOI, Minjae**
 **17084 Yongin-si (KR)**
• **JEONG, Jaeyoung**
 **17084 Yongin-si (KR)**
• **CHUNG, Hyunjei**
 **17084 Yongin-si (KR)**

(74) Representative: **Marks & Clerk LLP**
**15 Fetter Lane**
**London EC4A 1BW (GB)**

(54) **COMPOSITE POSITIVE ACTIVE MATERIAL FOR LITHIUM SECONDARY BATTERY, METHOD OF PREPARING THE SAME, AND LITHIUM SECONDARY BATTERY INCLUDING POSITIVE ELECTRODE INCLUDING THE SAME**

(57)    Disclosed are: a composite positive active material for a lithium secondary battery including lithium cobalt-based oxide; a method of preparing the same; and a lithium secondary battery including a positive electrode for a lithium secondary battery including the composite positive active material, wherein in the composite positive active material for a lithium secondary battery, a particle coating part is arranged in a form of islands on one surface of the lithium cobalt-based oxide, the particle coating part includes a first coating layer containing lithium titanium-based oxide, and a surface coating part is arranged in an internal region of another surface of the lithium cobalt-based oxide.

FIG. 4

EP 4 177 220 A1

**Description**

BACKGROUND

1. Field

The present disclosure relates to a composite positive active material for a lithium secondary battery, a method of preparing the same, and a lithium secondary battery including a positive electrode including the same.

2. Description of the Related Art

Recently, the use of portable electronic devices is increasing as the development in the advanced electronics industry has enabled the miniaturization and weight reduction of electronic equipment. Lithium secondary batteries, which have a high energy density and a long lifespan, are widely used as a power source of such portable electronic devices.

Lithium cobalt oxide ($LiCoO_2$) is widely used as a positive active material for high-density lithium secondary batteries. However, when lithium cobalt oxide is used as a positive active material, the positive active material is in contact with the electrolyte solution in the battery environment, and an interface structure is destroyed because of corrosion by HF especially at a high temperature and thus, cobalt (Co) is eluted and capacity of the lithium secondary battery is reduced.

In order to prevent the collapse of the layered positive active material structure in a high voltage environment, aluminium is doped into lithium cobalt oxide.

However, when aluminium is doped in this way, high voltage characteristics do not reach a satisfactory level, and thus, improvement is necessary.

SUMMARY

An aspect is to provide a novel composite positive active material for a lithium secondary battery with improved stability and a manufacturing method thereof.

Another aspect is to provide a lithium secondary battery having improved stability at a high voltage and having enhanced high-temperature characteristics by containing a positive electrode including the composite positive active material for a lithium secondary battery.

Additional aspects will be set forth in part in the description which follows and, in part, will be apparent from the description, or may be learned by practice of the presented embodiments of the disclosure.

According to an aspect, provided is a composite positive active material for a lithium secondary battery including lithium cobalt-based oxide, wherein

> a particle coating part is arranged in a form of islands on one surface of the lithium cobalt-based oxide, the particle coating part includes a first coating layer containing lithium titanium-based oxide, and
> a surface coating part is arranged in the internal region of another surface of the lithium cobalt-based oxide.

According to another aspect, provided is a manufacturing method of the composite positive active material for a lithium secondary battery including: obtaining a first precursor mixture by mixing lithium cobalt-based oxide (e.g. lithium cobalt-based oxide containing magnesium and aluminium), a titanium precursor, and cobalt hydroxide, and performing primary heat-treatment on the first precursor mixture to prepare a product of the primary heat-treatment; and obtaining a second precursor mixture by mixing the product of the primary heat-treatment and a zirconium precursor and performing a secondary heat-treatment on the second precursor mixture.

An amount of the cobalt hydroxide may be 1 part by weight to 3 parts by weight with respect to 100 parts by weight of the lithium cobalt-based oxide. An amount of the zirconium precursor may be 0.2 parts by weight to 0.54 parts by weight with respect to 100 parts by weight of the lithium cobalt-based oxide.

The zirconium precursor may be zirconium oxide, and the titanium precursor may be at least one selected from titanium hydroxide, titanium chloride, titanium sulfate, and titanium oxide.

The heat treatment of the first precursor mixture may be performed at 850 °C to 980 °C, and the heat treatment of the second precursor mixture may be performed at 750 °C to 900 °C.

According to another aspect, provided is a lithium secondary battery including: a positive electrode including the above-described composite positive active material;

> a negative electrode; and

an electrolyte arranged therebetween.

At least some of the above and other features of the invention are set out in the claims.

BRIEF DESCRIPTION OF THE DRAWINGS

The above and other aspects, features, and advantages of certain embodiments of the disclosure will be more apparent from the following description taken in conjunction with the accompanying drawings, in which:

FIG. 1A schematically illustrates a structure of a composite positive active material according to an embodiment;
FIG. 1B shows a structure of a composite positive active material according to another embodiment;
FIGS. 2A to 2F show results of scanning electron microscope-energy dispersive X-ray spectroscopy (SEM-EDS) analysis of the composite positive active material prepared according to Example 1;
FIG. 3 schematically illustrates a structure of a lithium secondary battery according to an embodiment; and
FIG. 4 shows results of high-resolution transmission electron microscopy (HR-TEM) analysis of the composite positive active material of Example 1.

DETAILED DESCRIPTION

Reference will now be made in detail to aspects, embodiments of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of at least one of the associated listed items. Expressions such as "at least one of," when preceding a list of elements, modify the entire list of elements and do not modify the individual elements of the list.

Hereinafter, a composite positive active material, a method of preparing the same, and a lithium secondary battery including a positive electrode including the composite positive active material according to example embodiments will be described in more detail.

Lithium cobalt oxide ($LiCoO_2$) is a high-capacity positive active material, and has a O3-type layered structure in which lithium, cobalt, and oxygen are regularly arranged as O-Li-O-Co-O-Li-O-Co-O along the [111] crystal plane of the rock salt structure. When a lithium secondary battery having a positive electrode including such a lithium cobalt oxide is charged, lithium ions are deintercalated out of the lattice in the crystal lattice of the lithium cobalt oxide.

When a charging voltage of a lithium secondary battery increases, an amount of lithium ions deintercalating from the crystal lattice of the lithium cobalt oxide increases, and at least a part of the O3-type layered structure may undergo a phase transition to a O1-type layered structure (O1 phase), in which Li does not exist in the crystal lattice. Accordingly, when a charging voltage is 4.52 V or more (based on full cell), the lithium cobalt oxide may undergo a phase transition to a H1-3-type layered structure (H1-3 phase), in which both the O3-type layered structure and the O1-type layered structure are present in the crystal lattice of the lithium cobalt oxide. In this way, the phase transfer from the O3-type layered structure to the H1-3-type layered structure and the O1-type layered structure is at least partially irreversible, and, in the H1-3-type layered structure and the O1-type layered structure, lithium ions that may be intercalated/deintercalated are reduced. When such a phase transition occurs, storage and lifespan characteristics of the lithium secondary battery are unavoidably rapidly deteriorated. In addition, when a lithium cobalt oxide contacts an electrolyte solution, the interfacial structure may be destroyed due to corrosion by HF especially at a high temperature, resulting in elution of Co and reduction of battery capacity, and the structure of the positive active material having a layered structure in a high voltage environment may collapse.

In order to solve this problem, lithium cobalt oxide doped with aluminium and magnesium was proposed to be used as a positive active material. However, a lithium secondary battery adopting a positive electrode which uses these positive active materials has high-voltage characteristics that does not reach a satisfactory level, and an improvement is needed.

A composite positive active material according to an embodiment was made to solve the above-described problems.

A composite positive active material according to an embodiment has a structure in which a particle coating part having a first coating layer containing lithium titanium-based oxide is formed in a form of islands on a surface of lithium cobalt-based oxide through the Mg-Ti Kirkendall effect, when magnesium of the lithium cobalt-based oxide moves to the surface when the lithium cobalt-based oxide having a certain amount of aluminium and magnesium reacts with titanium, zirconium and cobalt precursors.

A composite positive active material according to an embodiment has a particle coating part and a surface coating part, and thus, a reaction area between the composite positive active material and the electrolyte solution is reduced and side reactions are effectively suppressed.

A composite positive active material according to an embodiment is lithium cobalt-based oxide, a particle coating part may be arranged in a form of islands on one surface (that is, a first surface) of the lithium cobalt-based oxide, and a surface coating part may be arranged in a first internal region, which is arranged to contact the other surface (that is, a second surface) of the lithium cobalt-based oxide, or to be adjacent thereto.

A particle coating part includes a first coating layer containing lithium titanium-based oxide.

A second coating layer containing lithium zirconium-based oxide may be further included on the first coating layer. In addition, the surface coating part may include a third coating layer which has a spinel crystal structure.

Lithium cobalt-based oxide according to an embodiment may include magnesium and aluminium. In the lithium cobalt-based oxide, an amount of aluminium (Al) may be 4,000 ppm or more, for example, 4,000 ppm to 6,000 ppm. The content of aluminium may be 1.5 mol% to 3.0 mol%, or 2.0 mol% to 2.5 mol%, with respect to the total metal excluding lithium in the core active material. As used herein, the ppm content of aluminium refers to the mass of aluminium with respect to a million of the mass of the entire positive active material.

When the aluminium content is in the range, structural stability of the composite positive active material is improved and thus, a composite positive active material, in which high-voltage characteristics are improved, reduction of a battery capacity is minimized, and increase of resistance is minimized, may be obtained. In addition, in the lithium cobalt-based oxide, an amount of magnesium (Mg) may be 1,000 ppm or more, for example, 1,000 ppm to 1,500 ppm. The content of magnesium may be 0.25 mol% to 0.7 mol% with respect to the total metal of the core active material. As used herein, the ppm content of magnesium refers to the mass of magnesium with respect to a million of the mass of the entire positive active material.

Even when an aluminium content in the composite positive active material is 4,000 ppm or more as described above, aluminium rarely spreads to the coating layer although Al content increases, and as Li sites are doped with a part of Al, an effect of structural stabilization of the composite positive active material may also be achieved. Therefore, the composite positive active material has excellent conductivity due to excellent high-temperature characteristics and improved surface resistance. Accordingly, such a composite positive active material has an enhanced structural stability of the crystal structure of the lithium cobalt-based oxide even under a high-temperature and high-voltage environment, and thus, a positive active material having excellent lifespan and storage characteristics and improved resistance characteristics may be implemented.

In this specification, "high voltage" refers to a voltage in a range of 4.3 V to 4.8 V.

In a composite positive active material according to an embodiment, an amount of titanium may be 500 ppm to 800 ppm, and an amount of zirconium may be 2,100 ppm to 4,000 ppm. As used herein, the ppm content of titanium refers to the mass of titanium with respect to a million of the mass of the entire positive active material, and the ppm content of zirconium refers to the mass of zirconium with respect to a million of the mass of the entire positive active material.

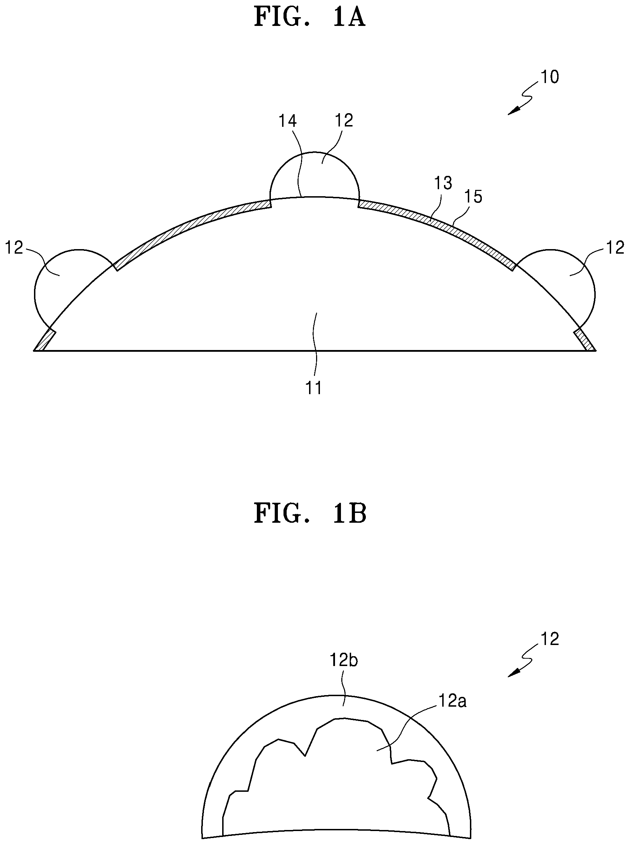

FIG. 1A schematically illustrates a structure of a composite positive active material according to an embodiment.

Referring to FIG. 1A, the composite positive active material 10 may include a particle coating part 12 on at least one surface, i.e., a first surface 14 of lithium cobalt-based oxide 11 and a surface coating part 13 on at least one surface, i.e., a second surface 15 of lithium cobalt-based oxide 11, and the particle coating part 12. The surface coating part 13 may have a layer form.

The particle coating part 12 may contain a first coating layer 12a arranged to contact the lithium cobalt-based oxide as shown in FIG. 1B, and a second coating layer 12b arranged on the first coating layer 12a. The first coating layer contains lithium titanium-based oxide, and the second coating layer contains lithium zirconium-based oxide.

The particle coating part 12 has a semicircle shape in FIG. 1A, but is not limited thereto. When the particle coating part 12 is present in a form of islands, compared to a case when the particle coating part has a continuous form, surface resistance of the composite positive active material is further improved. A size of the particle coating part may be 3.0 μm or less, for example, 0.5 μm to 3.0 μm. Here, a size of the particle coating part refers to the thickness, which may be measured by using a scanning electron microscope (SEM) or a transmission electron microscope (TEM). In this specification, a "thickness" of the particle coating portion refers to a distance in a direction from an outer surface of the lithium cobalt oxide particle to an outer surface of the particle coating portion.

In an internal region contacting a second surface 15 of the lithium cobalt-based oxide 11 exists the surface coating part 13. The surface coating part 13 includes a third coating layer which has a spinel crystal structure. When the surface coating part is present, high-temperature lifespan characteristics of the composite positive active material may be improved.

As used herein, the first surface 14 refers to one surface of the lithium cobalt-based oxide 11 on which the particle coating part 12 is formed as shown in FIG. 1A. And, the second surface 15 refers to the other surface of the lithium cobalt-based oxide 11 on which the surface coating part 13 is formed.

In a composite positive active material according to an embodiment, lithium deficient cobalt oxide has a spinel

crystal structure ($Co_3O_4$ spinel phase (Fd-3m)).

Specific examples of the lithium deficient cobalt oxide are a compound represented by Formula 5, a compound represented by Formula 5-1, a compound represented by Formula 5-2, or a combination thereof:

Formula 5 $Li_{1-\alpha}Mg_aCo_{1-x}M_xO_2$,

wherein in Formula 5, M is W, Mo, Zr, Ti, Mg, Ta, Al, Fe, V, Cr, Ba, Ca, Nb, or a combination thereof, $0.01 \leq \alpha \leq 0.5$, $0 \leq a \leq 0.05$, and $0 \leq x \leq 0.05$,

Formula 5-1 $Li_{1-\alpha}Mg_aCO_{2-x}M_xO_4$,

wherein in Formula 5-1, M is W, Mo, Zr, Ti, Mg, Ta, Al, Fe, V, Cr, Ba, Ca, Nb, or a combination thereof, $0.01 \leq \alpha \leq 0.5$, $0 \leq a \leq 0.05$, and $0 \leq x \leq 0.05$,

Formula 5-2 $Co_{3-x}M_xO_4$

wherein in Formula 5-2, M is W, Mo, Zr, Ti, Mg, Ta, Al, Fe, V, Cr, Ba, Ca, Nb, or a combination thereof, and $0 \leq x \leq 0.05$.

The lithium deficient cobalt oxide may include, for example, $Li_{0.95}CoO_2$, $Li_{0.95}Co_2O_4$, $Li_{0.8}Mg_{0.007}CoO_2$, or a combination thereof.

A thickness of a particle coating part 12 may be, for example, 100 nm to 500 nm.

According to an embodiment, a particle coating part 12 includes a first coating layer.

According to another embodiment, a particle coating part 12 has a structure in which a second coating layer 12b is arranged on a first coating layer 12a as shown in FIG.1B, and the boundary of the first coating layer 12a and the second coating layer 12b may be formed unevenly. Referring to FIG.1B, the boundary of the first coating layer 12a and the second coating layer 12b is uneven, but may be formed uniformly in some cases.

A thickness of the first coating layer 12a and the second coating layer 12b is variable, but for example, the thickness of the first coating layer 12a may be thicker than the thickness of the second coating layer 12b. A thickness of the first coating layer 12a may be 100 nm to 500 nm, and a thickness of the second coating layer 12b may be 100 nm to 300 nm. When a thickness of the first coating layer and the second coating layer is in the range, a composite positive active material with improved surface resistance may be obtained.

The surface coating part 13 may include a third coating layer which has a spinel crystal structure. Here, a thickness of the third coating layer may be not more than 100 nm, for example, 10 nm to 100 nm. The third coating layer may contain, for example, lithium cobalt-based oxide A.

In this specification, a "thickness" of the particle coating portion refers to a distance in a direction from an outer surface of the lithium cobalt oxide particle to an outer surface of the particle coating portion. A thickness of the first coating layer refers to a distance in a direction from an outer surface of the lithium cobalt oxide particle to an outer surface of first coating layer. A thickness of the second coating layer refers to a distance from an outer surface of the first coating layer to an outer surface of the particle coating portion. A thickness of the third coating layer refers to a distance from an outer surface of the first coating layer to an inner surface of the third coating layer. Thickness can be determined by SEM or TEM analysis of a cross-section of a particle. Thickness may be determined by an average distance if the coating layer has an uneven thickness.

An amount of the lithium titanium-based oxide in the particle coating part may be 0.05 parts by weight to 1.0 part by weight with respect to 100 parts by weight of the lithium cobalt-based oxide, and an amount of the lithium zirconium-based oxide in the particle coating part may be 0.05 parts by weight to 0.2 parts by weight with respect to 100 parts by weight of the lithium cobalt-based oxide. When contents of the lithium titanium-based oxide and the lithium zirconium-based oxide are in the range, a diffusion coefficient of a lithium ion increases and conductivity increases, so that a composite positive active material having a stabilized structure, in which side reactions with the electrolyte solution are suppressed, and elution of cobalt is suppressed, may be obtained.

An amount of lithium cobalt-based oxide A in the third coating layer of the surface coating part may be 0.01 part by weight to 1 part by weight with respect to 100 parts by weight of the lithium cobalt-based oxide. Lithium cobalt-based oxide A may be, for example, $LiCo_2O_4$, and when an amount of the lithium cobalt-based oxide A is in the range, a composite positive active material with improved electrical conductivity may be obtained.

When contents of the lithium titanium-based oxide in the first coating layer, and an amount of the lithium zirconium-based oxide in the second coating layer in the particle coating part, and an amount of lithium cobalt oxide A in the surface coating part are within the range, a diffusion coefficient of a lithium ion increases and electrical conductivity increases, and thus, a composite positive active material, having a stabilized structure, in which side reactions with the electrolyte solution are suppressed, may be prepared.

An example of the lithium titanium-based oxide in the first coating layer is a compound represented by Formula 1:

Formula 1          $Li_{2+a}Ti_{(1-x-y)}CO_xMg_yO_3$,

wherein in Formula 1, $-0.1 \leq \alpha \leq 0.1$, $0 < x \leq 0.5$, and $0 < y \leq 0.1$.

In Formula 1, x may be, for example, 0.01 to 0.3, 0.01 to 0.2, 0.01 to 0.1 or 0.01 to 0.05, and y may be, for example, 0.01 to 0.08, 0.01 to 0.05 or 0.01 to 0.03.

The lithium titanium-based oxide may be, for example, $Li_2Ti_{0.97}Co_{0.02}Mg_{0.01}O_3$, etc.

An example of the lithium zirconium-based oxide in the second coating layer is a compound represented by Formula 2:

Formula 2          $Li_{2+a}Zr_{(1-x-z)}Co_zM2_xO_3$,

wherein in Formula 2, M2 is at least one element selected from boron (B), magnesium (Mg), calcium (Ca), strontium (Sr), barium (Ba), titanium (Ti), vanadium (V), chromium (Cr), iron (Fe), copper (Cu) and aluminium (Al), $-0.1 \leq \alpha \leq 0.1$, $0 \leq x < 1$, and $0 \leq z \leq 0.1$.

In Formula 2, z may be 0.01 to 0.1, 0.01 to 0.08, or 0.01 to 0.05.

An example of the lithium zirconium-based oxide may be $Li_2Zr_{0.99}Co_{0.01}O_3$, etc.

The lithium cobalt-based oxide may have a R-3m rhombohedral layered structure. And the lithium cobalt-based oxide may be, for example, a compound represented by Formula 3.

Formula 3          $Li_{a-b}Mg_bCo_{(1-x-y-b)}Al_xM3_yO_2$,

wherein in Formula 3, $0.9 \leq a \leq 1.1$, $0 \leq b \leq 0.02$, $0 \leq x \leq 0.04$, and $0 \leq y \leq 0.01$, and
M3 is one selected from Ni, K, Na, Ca, Mg, Si, Fe, Cu, Zn, Ti, Sn, V, Ge, Ga, B, P, Se, Bi, As, Zr, Mn, Cr, Ge, Sr, V, Sc, Y, and a combination thereof.

An example of the lithium cobalt-based oxide may be a compound represented by Formula 4:

Formula 4          $Li_{a-b}Mg_bCo_{(1-x-b)}Al_xO_2$,

wherein in Formula 4, $0.9 \leq a \leq 1.1$, $0.001 \leq b \leq 0.01$, and $0.01 < x \leq 0.03$.

In Formula 4, a may be, for example, 0.9 to 1.05.

In Formulae 3 and 4, for example, $0.015 < x \leq 0.03$ and $0.005 \leq b \leq 0.01$.

A total thickness of a first coating layer and a second coating layer in a composite positive active material according to an embodiment may be 500 nm to 800 nm, and a thickness of a third coating layer may be not more than 100 nm, for example, 10 nm to 50 nm.

The second coating layer is arranged on the first coating layer, and the boundary between the first coating layer and the second coating layer may be even or uneven.

In a composite positive active material according to an embodiment, a ratio of a thickness of a first coating layer and a thickness of a second coating layer may be 1.1:1 to 1.5:1. Here, the ratio of the thickness may be obtained through analyses using a scanning electron microscope or a transmission electron microscope. In this specification, a thickness of the first coating layer refers to a distance in a direction from an outer surface of the lithium cobalt oxide particle to an outer surface of first coating layer. A thickness of the second coating layer refers to a distance from an outer surface of the first coating layer to an outer surface of the particle coating portion.

Lithium cobalt-based oxide may be, for example, small particles, large particles, or a mixture thereof.

A size of the large particle may be 10 $\mu$m to 20 $\mu$m, and a size of the small particle may be 3 $\mu$m to 6 $\mu$m. In addition, a mixing weight ratio of large particles and small particles in the mixture of the large particles and the small particles may be 7:3 to 9:1, 8:2 to 9:1, or for example, 5:1 to 7:1. When a mixing weight ratio of large particles and small particles is within the range, a high-temperature lifespan and high-temperature storage characteristics are improved.

A size of the large particles may be 10 $\mu$m to 20 $\mu$m, 17 $\mu$m to 20 $\mu$m, or for example, 18 $\mu$m to 20 $\mu$m. And, a size of the small particles may be 3 $\mu$m to 6 $\mu$m, for example, 3 ljm to 5 $\mu$m, or 3 $\mu$m to 4 $\mu$m.

In the present specification, a size of a particle is a particle diameter when the particles is spherical, and a length of the long axis when the particle is non-spherical such as plate-shaped or needle-shaped.

In the present specification, a size of a particle is an average particle diameter when the particles is spherical, and an average length of the long axis when the particle is non-spherical.

The particle diameter is, for example, an average particle diameter, and the length of the long axis is, for example, an average length of the long axis. The average particle diameter and the average length of the long axis indicates average values of the measured particle diameter and the measured length of the long axis, respectively.

A particle size may be identified by using a particle size meter, a scanning electron microscope, or a transmission electron microscope. For example, an average particle diameter may be an average particle diameter observed by using a scanning electron microscope (SEM). An average particle diameter may be calculated as an average particle diameter of about 10 to 30 particles by using a SEM image.

For example, an average particle diameter may be a median particle size or a D50 particle size. The term "D50" as used herein refers to the average diameter of particles whose cumulative volume corresponds to 50% by volume in the accumulated particle size distribution, unless otherwise defined herein. The term "D50" as used herein refers to a diameter corresponding to 50% in the accumulated particle size distribution curve, when the total number of particles is 100% in the accumulated particle size distribution curve in which particles are sequentially accumulated in the order of a particle having the smallest size to a particle having the largest size. The average particle diameter D50 may be measured by using one or more suitable methods available in the art such as, for example, a method using a particle size analyzer (e.g., (HORIBA, LA-950 laser particle size analyzer), transmission electron microscopy (TEM), or scanning electron microscopy (SEM). In the Examples, the average particle diameter is measured by using transmission electron microscopy (TEM), or scanning electron microscopy (SEM). Alternatively, for example, after a measurement apparatus using dynamic light-scattering is used, data analysis may be performed to count the number of particles for each of the particle size ranges, which will provide the average particle diameter D50 values.

A composite positive active material according to an embodiment may have a layered crystal structure and a specific surface area may be 0.1 $m^2/g$ to 3 $m^2/g$. The specific surface area is the BET specific surface area measured by the nitrogen adsorption method.

According to another aspect, a lithium secondary battery is provided including: a positive electrode including the composite positive active material; a negative electrode; and an electrolyte arranged therebetween.

Hereinafter, a preparation method of the composite positive active material according to an embodiment will be described in detail.

In order to prepare large-particle lithium cobalt-based oxide, a first mixture may be obtained by mixing a cobalt precursor of a particle size of 4 $\mu$m to 7 $\mu$m, a lithium precursor and a metal precursor.

Specifically, a first mixture of precursors may be obtained by mixing while a mixing ratio of a lithium precursor, a cobalt precursor, and a metal precursor may be stoichiometrically controlled in order to obtain the lithium cobalt-based oxide represented by Formula 3 below:

$$\text{Formula 3} \qquad Li_{a-b}Mg_bCo_{(1-x-y-b)}Al_xM3_yO_2,$$

wherein in Formula 3, $0.9 \leq a \leq 1.1$, $0 \leq b \leq 0.02$, $0 \leq x \leq 0.04$, and $0 \leq y \leq 0.01$, and
M3 is one selected from Ni, K, Na, Ca, Mg, Si, Fe, Cu, Zn, Ti, Sn, V, Ge, Ga, B, P, Se, Bi, As, Zr, Mn, Cr, Ge, Sr, V, Sc, Y, and a combination thereof.

The metal precursor may be at least one selected from, for example, a magnesium precursor, an aluminium precursor, and an M3 precursor.

As a lithium precursor, at least one selected from lithium hydroxide (LiOH), lithium carbonate ($LiCO_3$), lithium chloride, lithium sulfate ($Li_2SO_4$), and lithium nitrate may be used. As a cobalt precursor, at least one selected from cobalt carbonate, cobalt hydroxide, cobalt chloride, cobalt sulfate, and cobalt nitrate may be used.

As an aluminium precursor, at least one selected from aluminium sulfate, aluminium chloride, and aluminium hydroxide may be used, and as a magnesium precursor, at least one selected from magnesium sulfate, magnesium chloride, and magnesium hydroxide may be used.

For the mixing, a dry mixing such as a mechanical mixing may be performed by using a ball mill, a Banbury mixer, a homogenizer, or a Hensel mixer. A dry mixing may reduce manufacturing costs compared to a wet mixing.

A particle size of a cobalt precursor used in preparing the first mixture may be 4 $\mu$m to 7 $\mu$m or 4 $\mu$m to 6.0 $\mu$m. When the particle size of the cobalt precursor is less than 4 $\mu$m or more than 7 $\mu$m, it is difficult to obtain large-particle lithium cobalt-based oxide having a desired size.

Subsequently, by performing a primary heat-treatment on the first mixture in the air or under an oxygen atmosphere, large-particle lithium cobalt composite oxide may be obtained. The primary heat-treatment may be performed at 800 °C to 1,100 °C.

A particle size of the large-particle lithium cobalt-based oxide may be 10 $\mu$m to 20 $\mu$m, 17 $\mu$m to 20 $\mu$m, for example, 18 $\mu$m to 20 $\mu$m, for example, 19 $\mu$m.

Separately, in order to prepare small-particle lithium cobalt-based oxide, a second mixture may be obtained by mixing a cobalt precursor of a particle size of 2 $\mu$m to 3 $\mu$m, a lithium precursor and a metal precursor. Here, the metal precursor may be the same as the metal precursor described when manufacturing the first mixture.

By performing a primary heat-treatment on the second mixture, small-particle lithium cobalt composite oxide may be prepared. The primary heat-treatment may be performed at 800 °C to 1,000 °C.

A particle size of the small-particle lithium cobalt-based oxide may be 3 $\mu$m to 6 $\mu$m, 3 $\mu$m to 5 $\mu$m, for example, 3 $\mu$m to 4 $\mu$m.

When a size of the cobalt precursor used in preparing small-particle lithium cobalt composite oxide is less than 2 $\mu$m or more than 3 $\mu$m, it is difficult to obtain the small-particle lithium cobalt-based oxide having a desired size.

When preparing the large-particle lithium cobalt-based oxide and the small-particle lithium cobalt-based oxide, a mixing ratio (Li/Me) of lithium and a metal (Me) other than lithium may be 0.9 to 1.1, 1.02 to 1.04, 1.02 to 1.03, 022 to 1.028, or 1.023 to 1.026.

In preparing the large-particle lithium cobalt composite oxide and the small-particle lithium cobalt composite oxide, a heating rate may be 4 °C/min to 6 °C/min. When a heating rate is within the range, positive ions may be prevented from mixing in. When a heating rate is below 4 °C/min, phase stability improvement at a high voltage is minimal. A molar ratio of lithium and the metal may be 1.01 to 1.05, 1.01 to 1.04, 1.02 to 1.03, 1.02 to 1.03, or 1.04.

The above-described large-particle lithium cobalt-based oxide and the small-particle lithium cobalt-based oxide may be mixed at a weight ratio of 7:3 to 1:9, and a first precursor mixture is obtained by mixing in a titanium precursor and cobalt hydroxide, and a heat-treatment is performed thereto.

An amount of the cobalt hydroxide may be 1 part by weight to 3 parts by weight with respect to 100 parts by weight of the lithium cobalt-based oxide. When an amount of the cobalt hydroxide is within the range, a desired composite positive active material may be obtained.

The heat treatment may be performed at 850 °C to 980 °C, and a heating rate may be 2 °C/min to 10 °C/min, or, 4 °C/min to 6 °C/min. When a heating rate is within the range, a spinel structure may be formed on the surface coating part.

The heat-treatment may be performed in the air or under an oxygen atmosphere. Here, the oxygen atmosphere may be formed by using oxygen alone, or by using oxygen and inert gases such as nitrogen.

A second precursor mixture is obtained by mixing the product heat-treated according to the above process and a zirconium precursor, and a heat-treatment is performed on the second precursor mixture. The heat-treatment of the second precursor mixture may be performed at 750 °C to 900 °C. A heating rate may be 2 °C/min to 10 °C/min, or, for example, 4 °C/min to 6 °C/min. When a heating rate is within the range, surface characteristics of the composite positive active material may be controlled as desired.

An example of a titanium precursor may be, titanium oxide, titanium hydroxide, titanium chloride, or a combination thereof. Cobalt hydroxide has an excellent chemical reactivity compared to cobalt oxide. When using cobalt oxide as a cobalt precursor, because the particle size of the cobalt oxide is large, a coating layer in a form of islands may be formed, and a coating layer according to an embodiment may not be formed.

Cobalt hydroxide having an average particle diameter of 50 nm to 300 nm or 100 nm to 200 nm may be used. By using cobalt hydroxide having such a size, a composite positive active material which has a coating layer according to an embodiment may be obtained.

An amount of the cobalt hydroxide may be 1 part by weight to 3 parts by weight or 1.5 parts by weight to 2.5 parts by weight with respect to 100 parts by weight of the lithium cobalt-based oxide. And, an amount of the zirconium precursor may be 0.2 parts by weight to 0.54 parts by weight with respect to 100 parts by weight of the lithium cobalt-based oxide.

A zirconium precursor may be zirconium oxide, zirconium hydroxide, zirconium chloride, zirconium sulfate, or a combination thereof.

A molar ratio of lithium and the metal other than lithium in the precursor mixture before performing the heat-treatment may be controlled to be 0.99 to 1. When a molar ratio of lithium and the metal other than lithium is in the above-described range, a lithium cobalt composite oxide with improved high-voltage phase stability may be prepared.

A composite positive active material according to an embodiment may be prepared according to a general manufacturing method such as a spray pyrolysis method apart from the solid processing method.

According to another aspect, a positive electrode including the lithium cobalt composite oxide is provided.

According to still another aspect, a lithium secondary battery including the positive electrode is provided. A manufacturing method of the lithium secondary battery is as follows.

A positive electrode is prepared according to the following method.

A positive active material composition, in which a composite positive active material according to an embodiment, a binder, and a solvent are mixed, is prepared. A conductive agent may be further included in the positive active material composition. A positive electrode plate is prepared by directly coating the positive active material composition on a metal current collector and drying. Alternatively, the positive active material composition may be casted on a separate support, and then a film peeled off from the support may be laminated on the metal current collector to prepare a positive electrode plate. A first positive active material which is a positive active material generally used in a lithium secondary battery may be further included in preparing the positive electrode. At least one selected from lithium cobalt oxide, lithium nickel cobalt manganese oxide, lithium nickel cobalt aluminium oxide, lithium iron phosphate, and lithium manganese oxide may be further included as the first positive active material, but the first positive active material is not limited thereto, and all that may be used as a positive active material in the art may be used. For example, a compound represented by any one of the following formulae may be used: $Li_aA_{1-b}B'_bD_2$ (wherein, $0.90 \leq a \leq 1.8$, and $0 \leq b \leq 0.5$); $Li_aE_{1-b}B'_bO_{2-c}D_c$ (wherein, $0.90 \leq a \leq 1.8$, $0 \leq b \leq 0.5$, and $0 \leq c \leq 0.05$); $LiE_{2-b}B'_bO_{4-c}D_c$ (wherein, $0 \leq b \leq 0.5$, and $0 \leq c \leq 0.05$); $Li_aNi_{1-b-c}Co_bB'_cD_\alpha$ (wherein, $0.90 \leq a \leq 1.8$, $0 \leq b \leq 0.5$, $0 \leq c \leq 0.05$, and $0 < a \leq 2$); $Li_aNi_{1-b-c}Co_bB'_cO_{2-\alpha}F'_\alpha$ (wherein, $0.90 \leq a \leq 1.8$, $0 \leq b \leq 0.5$, $0 \leq c \leq 0.05$, and $0 < \alpha < 2$); $Li_aNi_{1-b\ c}Mn_bB'_cD_\alpha$ (wherein, $0.90 \leq a \leq 1.8$, $0 \leq b \leq 0.5$, $0 \leq c \leq 0.05$, and $0 < a \leq 2$); $Li_aNi_{1-b-c}Mn_bB'_cO_{2-\alpha}F'_\alpha$ (wherein, $0.90 \leq a \leq 1.8$, $0 \leq b \leq 0.5$, $0 \leq c \leq 0.05$, and $0 < a < 2$); $Li_aNi_bE_cG_dO_2$ (wherein, $0.90 \leq a \leq 1.8$, $0 \leq b \leq 0.9$, $0 \leq c \leq 0.5$, and $0.001 \leq d \leq 0.1$); $Li_aNi_bCo_cMn_dGeO_2$ (wherein, $0.90 \leq a \leq 1.8$, $0 \leq b \leq 0.9$, $0 \leq c \leq 0.5$, $0 \leq d \leq 0.5$, and $0.001 \leq e \leq 0.1$); $Li_aNiG_bO_2$ (wherein, $0.90 \leq a \leq 1.8$, and $0.001 \leq b \leq 0.1$); $Li_aCoG_bO_2$ (wherein, $0.90 \leq a \leq 1.8$, $0.001 \leq b \leq 0.1$); $Li_aMnG_bO_2$ (wherein, $0.90 \leq a \leq 1.8$, and $0.001 \leq b \leq 0.1$); $Li_aMn_2G_bO_4$ (wherein, $0.90 \leq a \leq 1.8$, $0.001 \leq b \leq 0.1$); $QO_2$; $QS_2$; $LiQS_2$; $V_2O_5$; $LiV_2O_5$; $LiI'O_2$; $LiNiVO_4$; $Li_{(3-f)}J_2(PO_4)_3$ ($0 \leq f \leq 2$); $Li_{(3-f)}Fe_2(PO_4)_3$ ($0 \leq f \leq 2$); and $LiFePO_4$. In the formulae above, A is Ni, Co, Mn, or a combination thereof; B' is Al, Ni, Co, Mn, Cr, Fe, Mg, Sr, V, a rare earth element, or a combination thereof; D is O, F, S, P, or a combination thereof; E is Co, Mn, or a combination thereof; F' is F, S, P, or a combination thereof; G is Al, Cr, Mn, Fe, Mg, La, Ce, Sr, V, or a combination thereof; Q is Ti, Mo, Mn, or a combination thereof; I' is Cr, V, Fe, Sc, Y, or a combination thereof; and J is V, Cr, Mn, Co, Ni, Cu, or a combination thereof.

In the positive active material composition, a binder may be polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, ethylene-propylene-diene polymer (EPDM), sulfonated-EPDM, styrene-butadiene rubber (SBR), fluororubber, polyamideimide, polyacrylic acid (PAA), and other various copolymers.

The conductive agent is not particularly limited provided that the conductive agent does not cause a chemical change in the battery and has conductivity and is, for example, graphite such as natural graphite or artificial graphite; carbon-based materials such as carbon black, acetylene black, ketjen black, channel black, furnace black, lamp black, and summer black; conductive fibers such as carbon nanotubes, carbon fibers, and metal fibers; carbon fluoride; metal powders such as aluminium powder and nickel powder; conductive whiskers such as zinc oxide and potassium titanate; conductive metal oxides such as titanium oxide; and conductive materials such as a polyphenylene derivative.

An amount of 1 part by weight to 10 parts by weight, or 1 part by weight to 5 parts by weight of the conductive agent may be used. When an amount of the conductive agent is in the range, the ultimately obtained electrode has excellent conductivity characteristics.

As a non-limiting example of the solvent, N-methyl pyrrolidone or the like may be used, and an amount of the solvent used may be 20 parts by weight to 200 parts by weight with respect to 100 parts by weight of the positive active material. When an amount of the solvent is in the range, the process to form a positive active material layer is easily performed.

A thickness of the positive electrode current collector may be 3 $\mu$m to 500 $\mu$m, and the positive electrode current collector is not particularly limited provided that the positive electrode current collector does not cause a chemical change in the battery and has conductivity and is, for example, stainless steel, aluminium, nickel, titanium, heat-treated carbon, or aluminium or stainless steel surface-treated with carbon, nickel, titanium, silver, etc. A current collector may increase adhesion of the positive active material by forming fine irregularities on its surface, and various forms such as a film, a sheet, a foil, a net, a porous body, a foam, and a nonwoven fabric are possible.

On the other hand, it is also possible to form pores inside the electrode by further adding a plasticizer to the positive active material composition and/or the negative active material composition.

Contents of the positive active material, the conductive agent, the binder, and the solvent are levels commonly used in lithium secondary batteries. Depending on the use and configuration of the lithium secondary battery, one or more of the conductive material, binder, and solvent may be omitted.

A negative electrode may be obtained by using an almost identical method, except that a negative active material is used instead of a positive active material in the process for manufacturing a negative electrode.

As a negative active material, a carbon-based material, silicon, silicon oxide, a silicon-based alloy, a silicon carbon-based material complex, tin, a tin-based alloy, metal oxide, or a combination thereof, may be used.

The carbon-based material may be crystalline carbon, amorphous carbon or a mixture thereof. The crystalline carbon may be graphite such as non-shaped, plate-like, flake-like, spherical or fibrous natural graphite, or artificial graphite, and the amorphous carbon may be soft carbon (carbon calcined at a low temperature) or hard carbon, mesophase pitch carbide, calcined cokes, graphene, carbon black, carbon nanotube, and carbon fiber, but is not necessarily limited to thereto and all that may be used in the art may be used.

For the negative active material, one selected from Si, SiOx ($0<x<2$, for example, x may be 0.5 to 1.5), Sn, $SnO_2$, a silicon-containing metal alloy, and a mixture thereof may be used. For the metal capable of forming the silicon alloy, at least one selected from Al, Sn, Ag, Fe, Bi, Mg, Zn, in, Ge, Pb, and Ti may be used.

The negative active material may include metals/metalloids that may be alloyed with lithium, an alloy thereof, or an oxide thereof. For example, the metal/metalloid that may be alloyed with lithium may be Si, Sn, Al, Ge, Pb, Bi, Sb, Si-Y alloy (wherein Y is an alkali metal, an alkaline earth metal, a group 13 element, a group 14 element, a transition metal, a rare earth element, or a combination thereof, and not Si), Sn-Y alloy (wherein Y is an alkali metal, an alkaline earth metal, a group 13 element, a group 14 element, a transition metal, a rare earth element, or a combination thereof, and not Sn), MnOx ($0<x\leq2$), or the like. The element Y may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, or a combination thereof. For example, the oxide of the metal/metalloid that may be alloyed with lithium may be lithium titanium oxide, vanadium oxide, lithium vanadium oxide, $SnO_2$, $SiO_x$($0<x<2$), etc.

The negative active material may include, for example, at least one selected from group 13 elements, group 14 elements, and group 15 elements in the periodic table of elements, specifically, at least one selected from Si, Ge, and Sn.

In a negative active material composition, a water-insoluble binder, a water-soluble binder, or a combination thereof may be used as a binder.

As the non-water-soluble binder, ethylene propylene copolymer, polyacrylonitrile, polystyrene, polyvinyl chloride, carboxylated polyvinyl chloride, polyvinyl fluoride, polyurethane, polytetrafluoroethylene, polyvinylidene fluoride, polyethylene, polypropylene, polyamideimide, polyimide, or a combination thereof may be used.

As the water-soluble binder, styrene-butadiene rubber (SBR), acrylated styrene-butadiene rubber (ABR), acrylonitrile-butadiene rubber, acrylic rubber, butyl rubber, fluororubber, ethylene oxide-containing polymer, polyvinylpyrrolidone, polyepichlorohydrin, polyphosphazene, ethylene propylene diene copolymer, polyvinylpyridine, chlorosulfonated polyethylene, latex, polyester resin, acrylic resin, phenol resin, epoxy resin, polyvinyl alcohol, or a combination thereof may be used.

When a water-soluble binder is used as the negative electrode binder, a cellulose-based compound capable of giving viscosity may be further included as a thickener. As the cellulose-based compound, one or more of carboxymethyl cellulose, hydroxypropylmethyl cellulose, methyl cellulose, or a alkali metal salt thereof may be mixed to be used. As the alkali metal, Na, K, or Li may be used. An amount of the thickener may be 0.1 part by weight to 3 parts by weight with respect to 100 parts by weight of the negative active material.

As the conductive agent, carbon materials such as natural graphite, artificial graphite, carbon black, acetylene black, ketjen black, and carbon fiber; metal-based materials such as metal powder of copper, nickel, aluminium, silver, or a metal fiber; conductive polymers such as a polyphenylene derivative; or a mixture thereof may be used.

In the negative active material composition, the solvent may be the same as that used in the positive active material composition. An amount of the solvent is a level commonly used in lithium secondary batteries.

A separator is interposed between the positive electrode and the negative electrode, and an insulating thin film having high ionic transmittance and mechanical strength may be used.

A diameter of the pore of the separator is generally 0.01 $\mu$m to 10 $\mu$m, and a thickness of the separator is generally 5 $\mu$m to 20 $\mu$m. As such a separator, for example, an olefin polymer such as polypropylene; sheets and nonwoven fabrics made of glass fibers or polyethylene may be used. When a solid polymer electrolyte is used as an electrolyte, the solid polymer electrolyte may also be a separator.

In a specific example of an olefin polymer in the separator, polyethylene, polypropylene, polyvinylidene fluoride, or a multilayer film of two or more layers thereof may be used, and a mixed multilayer film such as a polyethylene/polypropylene two-layer separator, a polyethylene/polypropylene/polyethylene three-layer separator, a polypropylene/polyethylene/polypropylene three-layer separator and the like may be used.

The non-aqueous electrolyte containing a lithium salt is composed of a non-aqueous electrolyte and a lithium salt.

As the non-aqueous electrolyte, a non-aqueous electrolyte, an organic solid electrolyte, or an inorganic solid electrolyte may be used.

The non-aqueous electrolyte solution may include an organic solvent. For the organic solvent, all that may be used as an organic solvent in the art may be used. The organic solvent may be, for example, propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, fluoroethylene carbonate, benzonitrile, acetonitrile, tetrahydrofuran, 2-methyltetrahydrofuran, $\gamma$-butyrolactone, dioxolane, 4-methyldioxolane, N,N-dimethylformamide, N,N-dimethylacetamide, dimethyl sulfoxide, dioxane, 1,2-dimethoxyethane, sulfolane, dichloroethane, chlorobenzene, nitrobenzene, diethylene glycol, dimethyl ether, or a mixture thereof.

As the organic solid electrolyte, for example, polyethylene derivatives, polyethylene oxide derivatives, polypropylene oxide derivatives, phosphoric acid ester polymers, polyvinyl alcohol, and the like may be used.

As the inorganic solid electrolyte, for example, $Li_3N$, $LiI$, $Li_5NI_2$, $Li_3N$-$LiI$-$LiOH$, $Li_2SiS_3$, $Li_4SiO_4$, $Li_4SiO_4$-$LiI$-$LiOH$, $Li_3PO_4$-$Li_2S$-$SiS_2$, or the like may be used.

The lithium salt is a material that dissolves well in the non-aqueous electrolyte, and may be, for example, $LiPF_6$, $LiBF_4$, $LiSbF_6$, $LiAsF_6$, $LiClO_4$, $LiCF_3SO_3$, $Li(CF_3SO_2)_2N$, $Li(FSO_2)_2N$, $LiC_4F_9SO_3$, $LiAlO_2$, $LiAlCl_4$, $LiN(C_xF_{2x+1}SO_2)(C_yF_{2y+1}SO_2)$ (wherein x, y are natural numbers), $LiCl$, $LiI$, or a mixture thereof. In addition, in order to improve charge/discharge characteristics, flame retardancy, etc., for example, pyridine, triethylphosphite, triethanolamine, cyclic ether, ethylene diamine, n-glyme, hexamethyl phosphoramide, nitrobenzene derivatives, sulfur, quinone imine dyes, N-substituted oxazolidinone, N, N-substituted imidazolidine, ethylene glycol dialkyl ether, ammonium salts, pyrrole, 2-methoxyethanol, aluminium trichloride, etc. may be added. In some cases, halogen-containing solvents such as carbon tetrachloride, ethylene trifluoride, etc. may be further included to give incombustibility. A preferred concentration of a lithium salt is in the range of 0.1 M to 2.0 M. When a concentration of a lithium salt is included in the range, the electrolyte has an appropriate conductivity and viscosity, and an excellent electrolyte performance may be exhibited, and lithium ions may move effectively.

The lithium secondary battery includes a positive electrode, a negative electrode, and a separator.

The positive electrode, the negative electrode, and the separator may be wound or folded to be enclosed in a battery case. Next, an organic electrolyte solution may be injected into the battery case, then the battery case may be sealed with a cap assembly, and a lithium battery is completed. The battery case may have a cylindrical shape, a rectangular shape, or a thin film shape.

A separator may be arranged between the positive electrode and the negative electrode to form a battery structure. When the battery structure is impregnated with an organic electrolyte, and accommodated in a pouch and sealed, a lithium ion polymer battery is completed.

In addition, a plurality of the battery structures may be laminated to form a battery pack, and such a battery pack may be used for all devices that require high capacity and high power. For example, the battery pack may be used in a laptop, a smartphone, an electric vehicle, etc.

A lithium secondary battery according to an embodiment which is given as an example is a rectangular shape, but the present disclosure is not limited thereto and may be applied to batteries of various shapes such as a cylindrical shape, a pouch shape, or a coin shape.

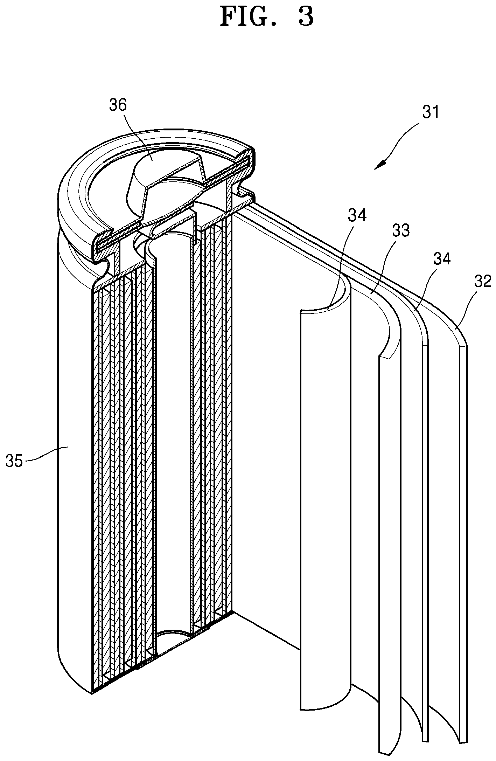

FIG. 3 is a cross-sectional drawing schematically illustrating a representative structure of a lithium secondary battery according to an embodiment.

Referring to FIG. 3, a lithium secondary battery 31 includes a positive electrode 33, a negative electrode 32, and a separator 34. The above-described positive electrode 33, negative electrode 32, and separator 34 are winded or folded to be enclosed in the battery case 35. A separator is interposed between the positive electrode and the negative electrode according to the shape of the battery and an alternately laminated battery structure may be formed. Next, an organic electrolyte solution is injected into the battery case 35, then the battery case 35 is sealed with a cap assembly 36, and a lithium secondary battery is completed. The battery case 35 may have a cylindrical shape, a rectangular shape, or a thin film shape. For example, the lithium secondary battery 31 may be a large thin-film battery. The lithium secondary battery may be a lithium-ion battery. When the battery structure is enclosed in a pouch, impregnated with an organic electrolyte solution and sealed, a lithium ion polymer battery is completed. In addition, a plurality of the battery structures may be laminated to form a battery pack, and such a battery pack may be used for all devices that require high capacity and high power. For example, the battery pack may be used in a laptop, a smartphone, an electric vehicle, etc.

The present disclosure will be described in more detail through the following examples and comparative examples. However, the examples are intended to illustrate the present disclosure, and the scope of the present disclosure is not limited thereto.

(Preparation of composite positive active material)

Example 1: LCO doped with 1,000 ppm of Mg and 4,000 ppm of Al (1.45 mol%) + surface coating of Ti 700 ppm/Zr 2,250 ppm

A first mixture was obtained by mixing lithium carbonate, $Co_3O_4$ (D50: 4.5 $\mu$m), aluminium hydroxide $Al(OH)_3$ and magnesium carbonate as a magnesium precursor. After heating the first mixture at a heating rate of 4.5 °C/min to 1088 °C, a primary heat-treatment was performed on the first mixture at the temperature for 15 hours under an air atmosphere, and large particles of $Li_{1.025}Mg_{0.001}Co_{0.985}Al_{0.015}O_2$ having a layered structure and an average particle diameter (D50) of about 17 $\mu$m were prepared. Here, a molar ratio of lithium to metal excluding lithium (Li/Me) was 1.025. The metal indicates cobalt and aluminium. The metal Me indicates represents the sum of metal elements excluding lithium.

Separately, a second mixture was obtained by mixing $Co_3O_4$ (D50: 2.5 $\mu$m), which is a cobalt precursor, aluminium hydroxide $Al(OH)_3$, lithium carbonate, and magnesium carbonate, which is a magnesium precursor, and the second mixture was heated at a heating rate of 4.5 °C/min to 940 °C, and a heat treatment was performed at the temperature for 5 hours, and small particles of $Li_{1.025}Mg_{0.001}Co_{0.985}Al_{0.015}O_2$ (D50: 3.5 $\mu$m) having a layered structure were obtained. Here, a molar ratio of lithium per a transition metal (Li/Me) was 1.025. The metal Me indicates represents the sum of metal elements excluding lithium.

After mixing the large particles and the small particles obtained in the process at a weight ratio of 8:2, titanium oxide and cobalt hydroxide ($Co(OH)_2$) (average particle diameter: about 100 nm) were added, and a third mixture was obtained.

The third mixture was heat-treated at about 950 °C. Here, an amount of the cobalt hydroxide is 2 parts by weight with respect to 100 parts by weight of the large particles and the small particles, and an amount of titanium oxide was stoichiometrically controlled so that an amount of titanium was about 700 ppm in the composite positive active material.

Subsequently, zirconium oxide was added to the heat-treated product to obtain a fourth mixture, and the fourth mixture was heat-treated at about 850 °C. Here, an amount of the zirconium oxide was stoichiometrically controlled so that an amount of zirconium was about 2250 ppm in the composite positive active material.

Through the heat-treatment, a bimodal composite positive active material containing large particles of $Li_{1.025}Mg_{0.001}Co_{0.985}Al_{0.015}O_2$ (D50: 17 $\mu$m) and small particles of $Li_{1.025}Mg_{0.001}Co_{0.985}Al_{0.015}O_2$ (D50: 3.5 $\mu$m), in which a first coating layer and a third coating layer are arranged on the surface, and a second coating layer is arranged on the first coating layer, was obtained. In addition, the first coating layer contains $Li_2Ti_{0.97}Co_{0.02}Mg_{0.01}O_3$, the second coating layer contains $Li_2Zr_{1.98}Co_{0.02}O_3$, and the third coating layer contains $LiCo_2O_4$.

Example 2: LCO doped with 1,000 ppm of Mg and 6,000 ppm of Al (2.17 mol%) + Surface coating with Ti 700 ppm / Zr 2,250 ppm

A composite positive active material was prepared in the same manner as in Example 1, except that $Li_{1.025}Mg_{0.001}Co_{0.978}Al_{0.022}O_2$ (D50: 17 $\mu$m) and $Li_{1.025}Mg_{0.001}Co_{0.978}Al_{0.022}O_2$ (D50: 3.5 $\mu$m) were used as large particles and small particles, respectively.

Example 3

A composite positive active material was prepared in the same manner as in Example 1, except that an amount of zirconium oxide in the fourth mixture was changed so that an amount of zirconium in the composite positive active material was about 4,000 ppm.

Comparative Example 1: LCO doped with 1,000 ppm of Mg [Nanoparticles $Co(OH)_2$ coating layer]

A large-particle and small-particle positive active material was prepared in the same manner as in Example 2, except that aluminium hydroxide was not added when preparing the first mixture and the second mixture.

After mixing the large particles and the small particles obtained in the process at a weight ratio of 8:2, cobalt hydroxide ($Co(OH)_2$) was added, and a third mixture was obtained. A secondary heat-treatment was performed on the third mixture at about 900 °C, and a bimodal positive active material was obtained.

Comparative Example 2: LCO doped with 4,000 ppm of Al (1.45 mol%) [Nanoparticles $Co(OH)_2$ coating]

A large-particle and small-particle positive active material was prepared in the same manner as in Example 1, except that magnesium carbonate was not added when preparing the first mixture and the second mixture.

After mixing the large particles and the small particles obtained in the process at a weight ratio of 8:2, cobalt hydroxide ($Co(OH)_2$) was added, and a third mixture was obtained. A secondary heat-treatment was performed on the third mixture at about 900 °C, and a bimodal positive active material was obtained.

Comparative Example 3: LCO doped with 1,000 ppm of Mg and 4,000 ppm of Al (1.45 mol%)

A large-particle and small-particle positive active material was prepared in the same manner as in Example 1, except that amounts of lithium carbonate, $Co_3O_4$, aluminum hydroxide $Al(OH)_3$ and $MgCO_3$, which is a magnesium precursor, were stoichiometrically controlled in preparing the first mixture and the second mixture, in order to obtain $Li_{1.025}Mg_{0.005}Co_{0.985}Al_{0.015}O_2$.

After mixing the large particles and the small particles obtained in the process at a weight ratio of 8:2, cobalt hydroxide ($Co(OH)_2$) was added, and a third mixture was obtained. A secondary heat-treatment was performed on the third mixture at about 900 °C, and a bimodal composite positive active material containing the large particles of $Li_{1.025}Mg_{0.005}Co_{0.985}Al_{0.015}O_2$ (D50: 17 $\mu$m) and the small particles of $Li_{1.025}Mg_{0.005}Co_{0.985}Al_{0.015}O_2$ O2 (D50: 3.5 $\mu$m) was obtained.

Comparative Example 4: LCO doped with 1,000 ppm of Mg and 4,000 ppm of Al (1.45 mol%) + Surface coating layer with Ti 700 ppm [Nanoparticles Co(OH)$_2$ coating)

After mixing the large particles and the small particles obtained according to Example 1 at a weight ratio of 8:2, titanium oxide and cobalt hydroxide (Co(OH)$_2$) were added, and a third mixture was obtained. The bimodal composite positive active material was prepared in the same manner as in Example 1, except that addition of zirconium oxide and heat-treatment were not performed on the heat-treated product.

(Preparation of lithium secondary battery)

Manufacture Example 1

A mixture of the positive active material obtained according to Example 1, polyvinylidene fluoride, and carbon black as a conductive agent was subjected to mixing by using a mixer to remove air bubbles to prepare a uniformly dispersed slurry for forming a positive active material layer. A solvent of N-methyl 2-pyrrolidone was added to the mixture, and a mixing ratio of the composite positive active material, the polyvinylidene fluoride, and the carbon black was a weight ratio of 98:1:1. The slurry prepared according to the process was coated on a thin film of aluminium by using a doctor's blade to make a thin electrode plate, and the plate was dried at 135 °C for 3 hours or more, and then a positive electrode was prepared through rolling and vacuum drying processes.

For the negative electrode, a composition for forming a negative active material was obtained by mixing natural graphite, carboxymethylcellulose (CMC), and styrene butadiene rubber (SBR), and the negative active material composition was coated on a copper current collector and dried to prepare a negative electrode. A weight ratio of the natural graphite, CMC, and SBR was 97.5:1:1.5, and an amount of distilled water was about 50 parts by weight with respect to 100 parts by weight of the total weight of the natural graphite, CMC, and SBR.

A separator (thickness: about 10 μm) consisting of a porous polyethylene (PE) film was interposed between the positive electrode and the negative electrode, and an electrolyte solution was injected to prepare a lithium secondary battery. The electrolyte was a solution of 1.1 M LiPF$_6$ dissolved in a mixed solvent of ethylene carbonate (EC), ethyl methyl carbonate (EMC), and dimethyl carbonate (DMC) in a volume ratio of 3:4:3.

Manufacture Examples 2 and 3

Lithium secondary batteries were prepared in the same manner as in Manufacture Example 1, except that each of composite positive active materials of Examples 2 and 3 was prepared instead of the positive active material of Example 1 when preparing a positive electrode.

Comparative Manufacture Example 1 to 4

A lithium secondary battery was prepared in the same manner as in Manufacture Example 1, except that each of positive active materials of Comparative Examples 1 to 4 was prepared instead of the positive active material of Example 1 when preparing a positive electrode.

Evaluation Example 1: Charge/discharge characteristics

A lithium secondary battery was charged at a constant current at 25 °C until a state of charge (SOC) of 90% was reached, aging was proceeded for 48 hours, and in a constant current/constant voltage mode, while maintaining a voltage of 4.58 V, the battery was cut off at a current of 0.05 C rate. Subsequently, the battery was discharged at a constant current of 0.5 C rate until the voltage reached 3.0 V (formation process).

The lithium secondary battery that went through the formation process was charged at a constant current of 0.2 C until the voltage reached 4.55 V. After the charging is completed in the battery, there was a rest period of about 10 minutes, and the battery was discharged at a constant current of 0.2 C until the voltage reached 3 V.

Initial charge/discharge efficiency was evaluated according to Equation 1 below and the evaluation results are shown in Table 1.

<Equation 1>

Initial charge/discharge efficiency (%) = (discharge capacity (0.2 C) at the first cycle / charge capacity (0.2 C) at the first cycle)X100

Evaluation Example 2: high-temperature characteristics

A lithium secondary battery was charged at a constant current at 45 °C until a state of charge (SOC) of 90% was reached, aging was proceeded for 48 hours, and in a constant current/constant voltage mode, while maintaining a voltage of 4.58 V, the battery was cut off at a current of 0.05 C rate. Subsequently, the battery was discharged at a constant current of 0.5 C rate until the voltage reached 3.0 V (formation process, 1st cycle).

The lithium secondary battery that went through the 1st cycle of the formation process was charged at 45 °C at a constant current of 0.2 C until the voltage reached 4.55 V. After the charging is completed in the battery, there was a rest period of about 10 minutes, and then the battery was discharged at a constant current of 0.2 C until the voltage reached 3 V; and the cycle was repeatedly performed for 50 times for an evaluation.

High-temperature lifespans were evaluated according to Equation 2 below and the evaluation results are shown in Table 1.

<Equation 2>

Lifespan (%) = (discharge capacity at the 40th cycle / charge capacity at the first cycle)X100

Evaluation Example 3: Direct current-resistance (DC-IR) test

The lithium secondary batteries prepared in Manufacture Examples 1 to 3 and Comparative Manufacture Examples 1 to 4 were charged at a constant current at 25 °C until a state of charge (SOC) of 90% was reached, aging was proceeded for 48 hours, and in a constant current/constant voltage mode, while maintaining a voltage of 4.58 V, the battery was cut off at a current of 0.05 C rate. Subsequently, the batteries were discharged at a constant current of 0.5 C rate until the voltage reached 3.0 V (formation process).

The lithium secondary batteries that went through the formation process were charged at a constant current of 0.2 C until the voltage reached 4.55 V. After the charging is completed in the batteries, there was a rest period of about 10 minutes, and the batteries were discharged at a constant current of 0.2 C until the voltage reached 3 V.

Direct current-resistances (DC-IR) of the lithium secondary batteries that went through the processes were measured, and the results are shown in Table 1 below:

[Table 1]

| Coin cell | Manufacture Example 1 | Manufacture Example 2 | Manufacture Example 3 | Comparative Manufacture Example 1 | Comparative Manufacture Example 2 | Comparative Manufacture Example 3 | Comparative Manufacture Example 4 |
|---|---|---|---|---|---|---|---|
| 0.2 C charge capacity (mAh) | 208.1 | 208.1 | 208.1 | 212.2 | 210.1 | 209.4 | 209.5 |
| 0.2 C discharge capacity (mAh) | 192.5 | 192.5 | 192.5 | 206.3 | 197.9 | 195.8 | 195.7 |
| 0.2 C charge/ discharge efficiency (%) | 92.5 | 92.5 | 92.1 | 97.2 | 94.2 | 93.5 | 93.4 |
| High-temperature lifespan (%) (@ 50th cycle) | 63.2 | 75.1 | 80.4 | 20.2 | 48.5 | 52.6 | 47.5 |
| DCIR (mΩ) | 11.0 | 10.5 | 9.4 | 20.2 | 18.2 | 18.3 | 13.2 |

Referring to Table 1, lithium secondary batteries of Manufacture Examples 1 to 3 have a significantly improved high-temperature lifespan and enhanced resistance characteristics compared to lithium secondary batteries of Comparative Manufacture Examples 1 to 4.

Evaluation Example 4: SEM-EDS analysis

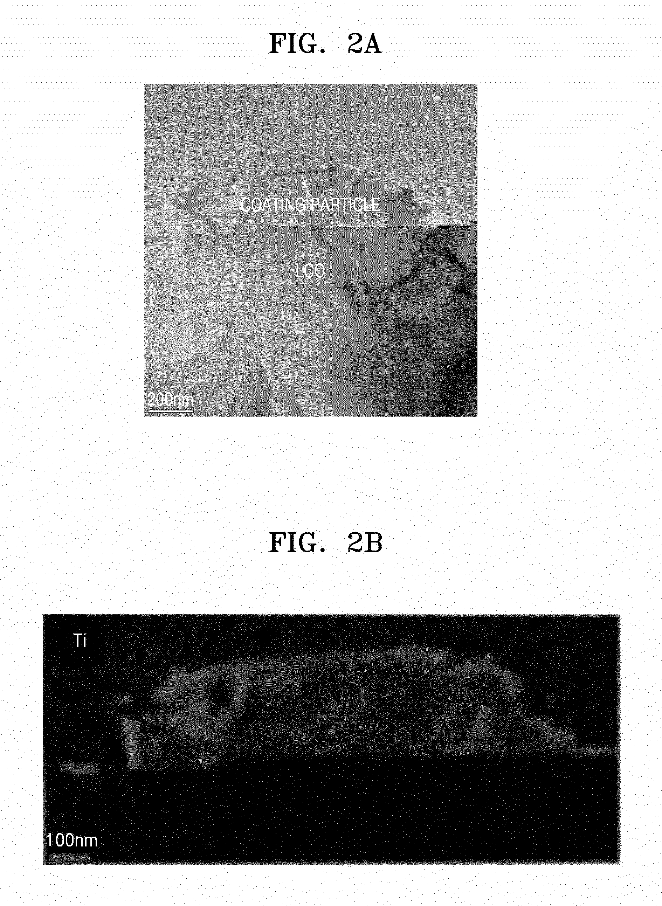

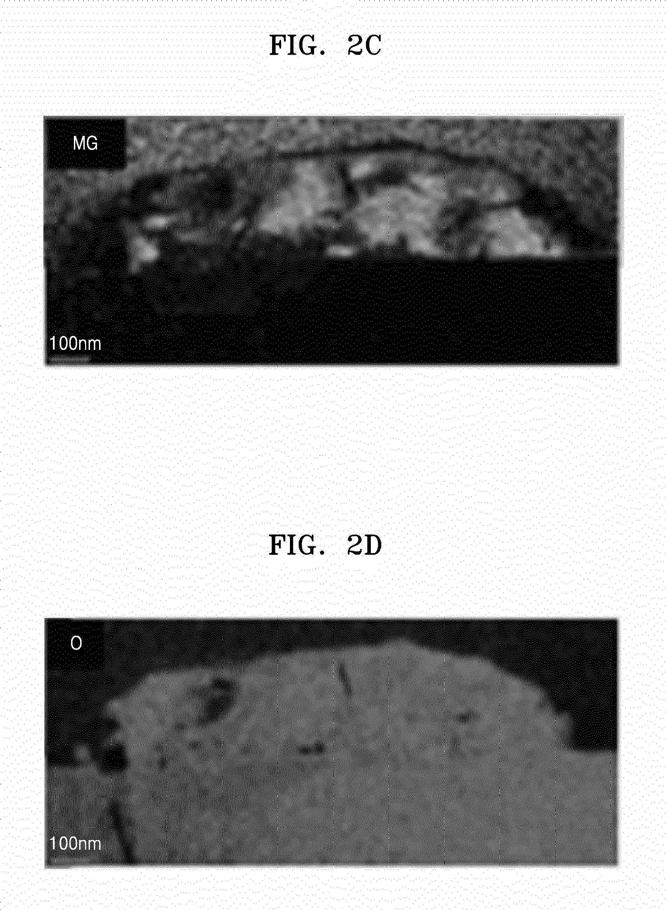

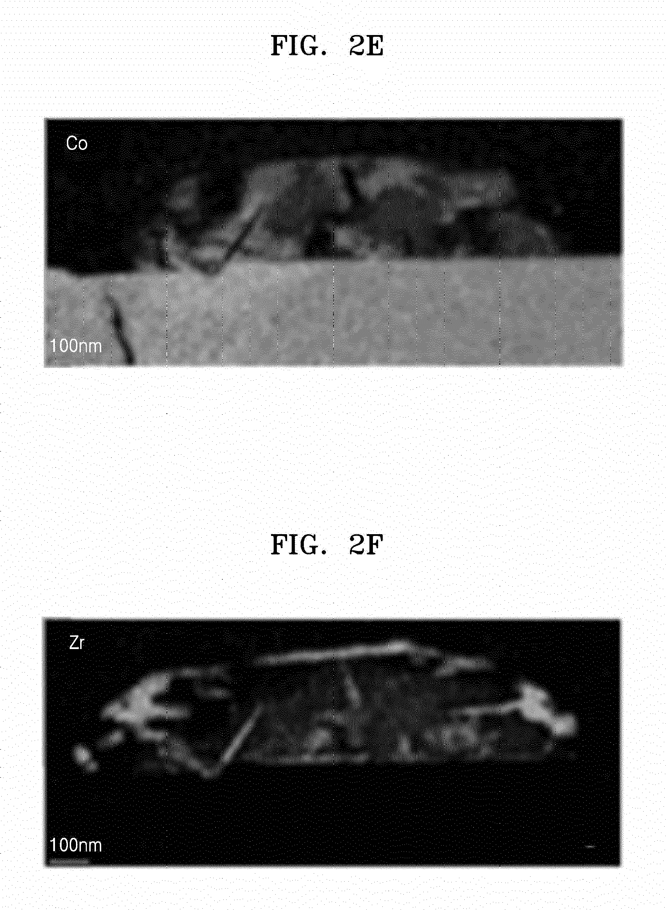

A Scanning electron microscope-energy dispersive X-ray spectroscopy (SEM-EDS) analysis was performed on the composite positive active material prepared according to Example 1. For the SEM-EDS, a Spectra 300 (Thermo Fisher) was used.
The SEM-EDS analysis results are shown in FIGS 2A to 2F. FIG. 2A shows a region measured by an EDS mapping. FIG. 2B is an image of Ti mapping, FIG. 2C is an image of Mg mapping, FIG. 2D is an image of O mapping, FIG. 2E is an image of Co mapping, and FIG. 2F is an image of Zr mapping.
Referring to these, the core region of the composite positive active material and a region where coating particles are formed indicate that Co components are evenly present, Mg components appear in the region where the coating particles are formed, and Zr and Ti components appear in the particle coating region. It may be seen that O components are evenly distributed both in the core region and the coating particle region.

Evaluation Example 5: High-resolution transmission electron microscopy (HR-TEM)

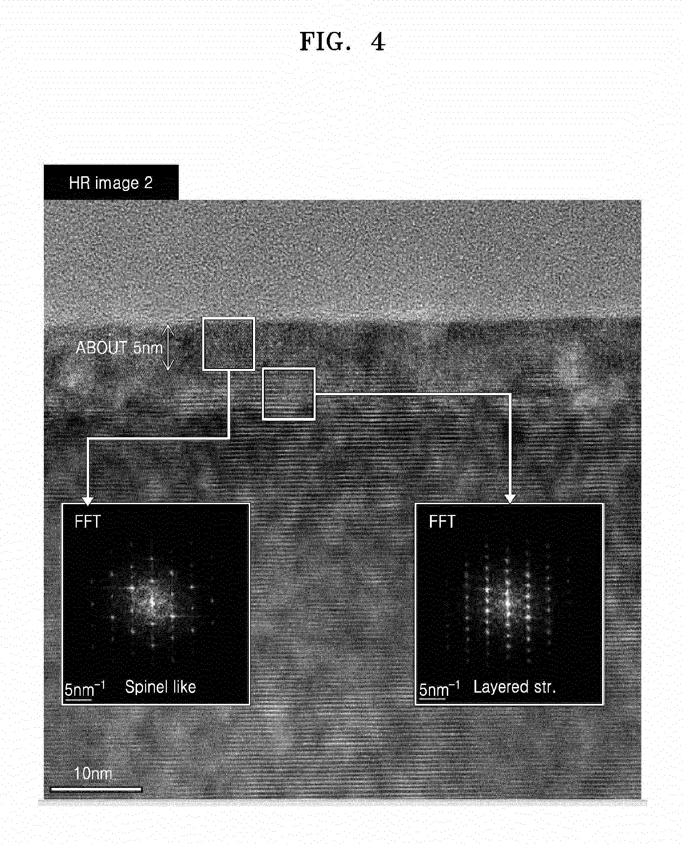

A high-resolution transmission electron microscopy (HR-TEM) analysis was performed on the composite positive active material of Example 1, and the analysis results are shown in FIG. 4.
As results of the analysis, it may be seen that $LiCo_2O_4$ having a spinel structure is formed on a surface of the core active material particle having a layered structure (R-3m) in the composite positive active material of Example 1.
A composite positive active material according to an embodiment has an effect of suppressing phase transition on the surface and may suppress side reactions with the electrolyte solution on the surface.
A lithium secondary battery with improved high-voltage characteristics may be prepared by applying a positive electrode including such a composite positive active material. It should be understood that embodiments described herein should be considered in a descriptive sense only and not for purposes of limitation.
Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the disclosure as defined by the following claims.

**Claims**

1. A composite positive active material for a lithium secondary battery comprising: lithium cobalt-based oxide, wherein a particle coating part is arranged in a form of islands on one surface of the lithium cobalt-based oxide, the particle coating part includes a first coating layer containing lithium titanium-based oxide, and
a surface coating part is arranged in an internal region of another surface of the lithium cobalt-based oxide.

2. The composite positive active material for a lithium secondary battery of claim 1, wherein an amount of aluminium in the lithium cobalt-based oxide is 4,000 ppm or more, and an amount of magnesium in the lithium cobalt-based oxide is 1,000 ppm or more.

3. The composite positive active material for a lithium secondary battery of claim 1 or claim 2, wherein the lithium titanium-based oxide is a compound represented by Formula 1:

$$\text{Formula 1} \qquad Li_{2+a}Ti_{(1-x-y)}Co_xMg_yO_3,$$

wherein in Formula 1, $-0.1 \leq \alpha \leq 0.1$, $0 < x \leq 0.5$, and $0 < y \leq 0.1$.

4. The composite positive active material for a lithium secondary battery of any one of claims 1 to 3, wherein the particle coating part further includes a second coating layer, and the second coating layer is arranged on the first coating layer and contains lithium zirconium-based oxide, optionally wherein the lithium zirconium-based oxide is a compound represented by Formula 2:

$$\text{Formula 2} \qquad Li_{2+a}Zr_{(1-x-z)}Co_zM2_zO_3,$$

wherein in Formula 2, M2 is at least one element selected from boron (B), magnesium (Mg), calcium (Ca), strontium (Sr), barium (Ba), titanium (Ti), vanadium (V), chromium (Cr), iron (Fe), copper (Cu) and aluminium (Al), and

$-0.1 \leq \alpha \leq 0.1$, $0 \leq x < 1$, and $0 \leq z \leq 0.1$.

5. The composite positive active material for a lithium secondary battery of any one of claims 1 to 4, wherein the surface coating part comprises lithium cobalt-based oxide A, optionally wherein an amount of the lithium cobalt-based oxide A is 0.01 parts by weight to 1 part by weight with respect to 100 parts by weight of the lithium cobalt-based oxide.

6. The composite positive active material for a lithium secondary battery of any one of claims 1 to 5, wherein the lithium cobalt-based oxide is a compound represented by Formula 3:

$$\text{Formula 3} \qquad Li_{a-b}Mg_bCO_{(1-x-y-b)}Al_xM3_yO_2,$$

wherein in Formula 3, $0.9 \leq a \leq 1.1$, $0 \leq b \leq 0.02$, $0 \leq x \leq 0.04$, and $0 \leq y \leq 0.01$, and
M3 is one selected from Ni, K, Na, Ca, Mg, Si, Fe, Cu, Zn, Ti, Sn, V, Ge, Ga, B, P, Se, Bi, As, Zr, Mn, Cr, Ge, Sr, V, Sc, Y, and a combination thereof.

7. The composite positive active material for a lithium secondary battery of any one of claims 1 to 6, wherein in the particle coating part, an amount of lithium titanium-based oxide is 0.05 parts by weight to 1.0 part by weight with respect to 100 parts by weight of the lithium cobalt-based oxide.

8. The composite positive active material for a lithium secondary battery of any one of claims 4 to 7, wherein in the particle coating part, an amount of the lithium zirconium-based oxide is 0.05 parts by weight to 0.2 parts by weight with respect to 100 parts by weight of the lithium cobalt-based oxide.

9. The composite positive active material for a lithium secondary battery of any one of claims 1 to 8, wherein the lithium cobalt-based oxide is in the form of small particles, large particles, or a mixture of small particles and large particles, optionally wherein a size of each of the large particles is about 10 $\mu$m to about 20 $\mu$m, and a size of each of the small particles is about 3 $\mu$m to about 6 $\mu$m.

10. The composite positive active material for a lithium secondary battery of claim 9, wherein a mixing weight ratio of the large particles and the small particles is 7:3 to 9:1 in the mixture of large particles and small particles.

11. A method of preparing a composite positive active material for a lithium secondary battery the method comprising:
mixing lithium cobalt-based oxide, a titanium precursor, and cobalt hydroxide to obtain a first precursor mixture, and performing primary heat-treatment on the first precursor mixture to prepare a product of the primary heat-treatment; and
mixing the product of the primary heat-treatment and a zirconium precursor to obtain a second precursor mixture and heat-treating the second precursor mixture to prepare the composite positive active material.

12. The method of preparing a composite positive active material for a lithium secondary battery of claim 11, wherein:

(i) an amount of the cobalt hydroxide is 1 part by weight to 3 parts by weight with respect to 100 parts by weight of the lithium cobalt-based oxide; and/or
(ii) an amount of the zirconium precursor is 0.2 parts by weight to 0.54 parts by weight with respect to 100 parts by weight of the lithium cobalt-based oxide.

13. The method of preparing a composite positive active material for a lithium secondary battery of claim 11 or claim 12, wherein the zirconium precursor is zirconium oxide, and the titanium precursor is at least one selected from titanium hydroxide, titanium chloride, titanium sulfate, and titanium oxide.

14. The method of preparing a composite positive active material for a lithium secondary battery of any one of claims 11 to 13, wherein:

(i) the primary heat-treatment of the first precursor mixture is performed at 850 °C to 980 °C; and/or
(ii) the heat-treatment of the second precursor mixture is performed at 750 °C to 900 °C.

**15.** A lithium secondary battery comprising:

a positive electrode comprising the composite positive active material of any one of claims 1 to 10;
a negative electrode; and
an electrolyte arranged therebetween.

# FIG. 1A

# FIG. 1B

# FIG. 2A

# FIG. 2B

# FIG. 2C

# FIG. 2D

## FIG. 2E

## FIG. 2F

# FIG. 3

# FIG. 4

Europäisches
Patentamt

European
Patent Office

Office européen
des brevets

# EUROPEAN SEARCH REPORT

Application Number

EP 22 20 6220

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | US 2017/222211 A1 (RYU JI HOON [KR] ET AL) 3 August 2017 (2017-08-03)<br>* paragraph [0031]; examples; tables * | 1,3,5-7, 9,10,15<br>2<br>4,11-14 | INV.<br>C01G51/00<br>H01M4/131<br>H01M4/36<br>H01M4/525 |
| Y<br><br>A | EP 2 395 581 A1 (AGC SEIMI CHEMICAL CO LTD [JP]) 14 December 2011 (2011-12-14)<br>* examples * | 2<br><br>1,3-15 | |
| A | US 2007/122705 A1 (PAULSEN JENS M [NZ] ET AL) 31 May 2007 (2007-05-31)<br>* examples * | 1-15 | |
| A | US 2020/067091 A1 (JO CHI HO [KR] ET AL) 27 February 2020 (2020-02-27)<br>* examples * | 1-15 | |

TECHNICAL FIELDS
SEARCHED       (IPC)

C01G
H01M

The present search report has been drawn up for all claims

| Place of search | Date of completion of the search | Examiner |
|---|---|---|
| Munich | 20 March 2023 | Marucci, Alessandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 20 6220

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2023

| Patent document cited in search report | Publication date | Patent family member(s) | Publication date |
|---|---|---|---|
| US 2017222211 A1 | 03-08-2017 | CN 106797028 A | 31-05-2017 |
| | | EP 3203556 A1 | 09-08-2017 |
| | | JP 6672278 B2 | 25-03-2020 |
| | | JP 7150381 B2 | 11-10-2022 |
| | | JP 2017536648 A | 07-12-2017 |
| | | JP 2020107609 A | 09-07-2020 |
| | | KR 20160040116 A | 12-04-2016 |
| | | US 2017222211 A1 | 03-08-2017 |
| EP 2395581 A1 | 14-12-2011 | CN 102239586 A | 09-11-2011 |
| | | EP 2395581 A1 | 14-12-2011 |
| | | JP 5486516 B2 | 07-05-2014 |
| | | JP WO2010090185 A1 | 09-08-2012 |
| | | KR 20110122095 A | 09-11-2011 |
| | | US 2011287321 A1 | 24-11-2011 |
| | | WO 2010090185 A1 | 12-08-2010 |
| US 2007122705 A1 | 31-05-2007 | CA 2552375 A1 | 14-07-2005 |
| | | CN 1902776 A | 24-01-2007 |
| | | EP 1716609 A1 | 02-11-2006 |
| | | EP 3432392 A1 | 23-01-2019 |
| | | JP 4890264 B2 | 07-03-2012 |
| | | JP 5384468 B2 | 08-01-2014 |
| | | JP 2007517368 A | 28-06-2007 |
| | | JP 2011091050 A | 06-05-2011 |
| | | KR 20060105039 A | 09-10-2006 |
| | | PL 1716609 T3 | 28-02-2019 |
| | | TW I254479 B | 01-05-2006 |
| | | US 2007122705 A1 | 31-05-2007 |
| | | US 2010264363 A1 | 21-10-2010 |
| | | WO 2005064715 A1 | 14-07-2005 |
| US 2020067091 A1 | 27-02-2020 | KR 20200022903 A | 04-03-2020 |
| | | US 2020067091 A1 | 27-02-2020 |
| | | US 2022246928 A1 | 04-08-2022 |
| | | US 2022246929 A1 | 04-08-2022 |

EPO FORM P0459

For more details about this annex : see Official Journal of the European Patent Office, No. 12/82